# EUROPEAN PATENT SPECIFICATION

(11) **EP 2 171 476 B1**
(45) Date of publication and mention of the grant of the patent: **18.05.2011**
(21) Application number: 08781558.5
(22) Date of filing: 09.07.2008
(51) Int. Cl.: G01N 35/00, G01N 35/10, B01L 3/02

(54) **AUTONOMOUS SYRINGE AND GRID SYSTEMS**
AUTONOME SPRITZEN- UND GITTERSYSTEME
SERINGUE AUTONOME ET SYSTÈMES DE GRILLES

(30) Priority: 09.07.2007 US 948620 P; 29.01.2008 US 24285
(43) Date of publication of application: 07.04.2010
(73) Proprietor: Parker-Hannifin Corporation, Cleveland, OH 44124 (US)
(72) Inventor: MACLEAN, Max, Andover, Massachusetts 01816 (US); BANTZ, Daniel, Brookline, New Hampshire 03033 (US); TSENG, Angela, Pepperell, Massachusetts 01463 (US); WYNN, Kenneth, Boyleston, Massachusetts 01505 (US)
(74) Representative: Belcher, Simon James
(86) International application number: PCT/US2008/069523
(87) International publication number: WO 2009/009590

(56) References cited:
- WO-A-2006/083695
- US-A1- 2003 086 828
- US-B1- 6 599 479

## Description

The invention herein described relates generally to laboratory sample management operations and systems including robotic handling systems, components and methods, particularly for analytical applications, more particularly for liquid sample analytical systems, and still more particularly for bioanalytical and pharmaceutical applications.

International Publication No. WO 2005/124366 A1, describes a system and method that enables efficient transport of movable devices such as sampling probes and other transportable devices. The system and method permit operational timesharing of a transport mechanism or multiple transport mechanisms for the movable devices. In addition, control of a transport mechanism can be effected on an event-driven basis. To facilitate system control, each movable device may be uniquely identified for independent operation by the controller.

The sampling probes typically provide for aspirating and/or dispensing an agent. The sampling probes may be self-contained thereby eliminating the need for a tether and thus reducing the complexity of coordinating the flow of the sampling probes through the system. An untethered self-contained sampling probe typically would include a plunger and a motive device for moving the plunger in response to a command signal. The command signal may be effected wirelessly between the sampling probe and a stationary system component, and/or by other suitable means.

The self-contained sampling probe may include a dedicated metering device for independent aspiration and/or dispensing of an agent, and control circuitry for receiving commands and controlling the metering device. The metering device generally comprises a syringe including a lumen, a plunger for drawing and/or dispensing a fluid into and/or from the lumen, and a motive device, such as an electric motor, for moving the plunger. In addition, the sampling probe may include a power supply for powering the motor and associated control circuitry, or other means by which power is supplied to the syringe at a station.

WO-A-2006/083695 discloses various components that may be used in a system as above-described. In particular, said application discloses a grid assembly that provides mechanical support, electrical power, and communication for autonomous syringes during normal, automated operation. The grids may consist of alternating horizontal strata of insulating and electrically conducting material with at least one vertically contiguous, round hole constructed through the layers exposing annular, layered, alternating edges of the two materials at specific heights within the hole. The device may be constructed by starting with an insulating sheet at the bottom followed by three alternating sheets each of conductive and insulating material respectively. The sheets may be made to specific thicknesses to place respective conducting layers at specific distances from the upper surface of the top insulating layer to match axially separated conductive pins protruding through the peripheral surface of an autonomous syringe. This configuration an be used to provide continuous electrical contact between the grid and syringe independent of the syringe's orientation about its long axis.

The disclosed configuration works very well for applications requiring only a modest to moderate number of insertions and retractions of the syringe between normal maintenance intervals. However, after only roughly 1,000 to 2,000 insertions and retractions, incidental scraping of the syringe's exterior surface along the grid's annulus as it is being placed into and withdrawn from the grid can cause enough of the grid's insulating material, the syringe body's external coating, and/or general debris, to skive off and get dragged over the conductive layers forming an intermittent insulation layer between the syringe's push pins and the grid's conductors resulting in highly unreliable behavior.

US-6599479 discloses a device for electrically triggering micro-drop delivery. A multi-channel dispensing head includes a plurality of micro-pipettes each having an electrically actuated trigger device with a ground and a signal terminal and a shared carrier having a plurality of receptacles. The receptacles are sized and shaped to receive the micro-pipettes and each receptacle has a ground and a signal contact corresponding to the micro-pipette terminals.

US-A-2003/0086828 discloses a micro-dispenser for biochemical analysis arranged to dispense predetermined amounts of fluids under the control of a controller. The micro-dispenser comprises an array of tube assemblies and a base having a corresponding array of holes electrically connected to the controller. The tube assemblies are pre-filled with predetermined fluids and are detachably disposed in the holes. The tubes assemblies dispense the fluids through the base under the control of the controller.

The present invention provides a syringe and grid interface that enables one or more advantages to be achieved.

Accordingly, the present invention provides a grid for a laboratory sample management system comprising an annulus into which a syringe can be axially inserted; and a plurality of compliant, electrical grid contacts at the interior surface of the annulus for effecting electrical contact with a fixed or compliant syringe contact on the syringe whereby electrical contact between the syringe and the grid can be established, wherein the plurality of compliant, electrical grid contacts are circumferentially spaced apart around the interior surface of the annulus for establishing electrical contact with correspondingly arranged electrical syringe contacts on the syringe.

The invention also provides a syringe and grid system comprising the grid of the invention in combination with a syringe which can be inserted into and removed from the annulus of the grid, the syringe having at least one fixed or compliant electrical syringe contact on the periphery of the syringe which is engaged by the grid contact on the inner diameter surface of the annulus when the syringe is inserted into the annulus of the grid.

The invention also provides an interface device for a sampling probe that includes electrical circuitry and a connector assembly for connecting the electrical circuitry to an external device, the connector assembly including a plurality of contact members located at a side wall of the housing, said interface device including an aperture for receiving the sampling probe, and a plurality of vertically elongated mating contact members for interfacing with the contact members of the connector assembly, wherein the plurality of vertically elongated mating contact members are circumferentially arranged around the aperture for effecting contact with respective contact members of the connector assembly.

The invention also provides a syringe and grid system comprising a grid having at least one annulus, the annulus having at least one electrical grid contact on an inner diameter surface of the annulus; and a syringe insertable into and removable from the annulus of the grid, the syringe having at least one electrical syringe contact on the periphery of the syringe for mating with the grid contact; and wherein at least one of the mating contacts is actively retracted for insertion of the syringe into the annulus of the grid or removal of the syringe from the annulus of the grid and actively extended to engage the other contact once the mating contacts have been brought into registry with respect to one another.

The invention also provides a method of effecting electrical communication between a syringe and a grid in a laboratory sample management system, comprising actively retracting at least one of the mating contacts for insertion of the syringe into the grid and/or removal of the syringe from the grid, and actively extending the at least one of the mating contacts to engage the mating contact once the mating contacts have been brought into registry with respect to one another.

The syringe and grid interface can be used in applications requiring large numbers of reliable syringe insertions and retractions. Surprisingly and unexpectedly, the use of compliant electrical contact(s) on the grid rather than or in addition to compliant electrical contact(s) on the syringe, avoids one or more of the previously encountered problems and enables large numbers of reliable syringe insertions and retractions.

The grid assembly can provide continuous electrical contact between the grid and syringe as the syringe is moved axially relative to the grid. While providing rotationally isotropic grids is desirable in some instances such as when human beings insert or retract syringes from the grid elements, providing vertically continuous grids is desirable in other situations. The latter allows, for instance, syringe placement at continuously selectable heights over various modules such as sample plates. A vertical grid can also enable the transfer of syringes from an energized gripper/syringe collection into grid elements, and vice versa, without having to power down the syringe to eliminate spurious communication signals as the syringe's contacts pass across the grid's annular contacts.

The herein disclosed grid designs are complimentary to the grid design disclosed in WO-A-2006/083695 which are useful for typical applications of the autonomous syringe described in said application or in this application.

Further features of the invention will become apparent from the following detailed description when considered in conjunction with the drawings.

In the annexed drawings,
FIG. 1 is a perspective view of an exemplary grid assembly according to the invention;
FIG. 2 is a perspective view of the grid assembly of FIG. 1, wherein a grid block (housing) and mount are partly broken away in cross-section;
FIG. 3 is a perspective view of the grid assembly of FIG. 1, with the grid block removed to show the electrical contacts of the grid assembly;
FIG.4 is a perspective view of the electrical contacts;
FIG. 5 is a perspective view showing a syringe partway inserted into the grid assembly;
FIG. 6 is a perspective view showing a syringe partway inserted into the grid assembly;
FIG. 7 is a cross-sectional view of the grid assembly, with the syringe having been fully inserted into the grid assembly by a robotic gripper on a motion mechanism;
FIG. 8 is a cross-sectional view of the grid assembly with the syringe fully inserted therein;
FIG. 9 is a cross-sectional view of the grid assembly with the syringe partially withdrawn;
FIG. 10 is a cross-sectional view of the grid assembly with the syringe being manipulated by the robotic gripper;
FIG. 11 is an isometric view of another grid according to the invention, with compliant contacts and its interaction with an autonomous syringe with non-compliant contacts;
FIG. 12 is a cross-sectional view of the grid and a side elevational view of the syringe of FIG. 11;
FIG. 13 is a side elevational view of the syringe of FIG. 11 and a contact of the grid;
FIG. 14 is a cross-sectional view of the grid and a side elevational view of the syringe of FIG. 11; and
FIG. 15 is a top view of a grid with a syringe inserted showing solid, guide areas and milled electrical contact areas.

### Detailed Description

Because the various aspects of the invention were conceived and developed for use in an adaptive, synchronized motion and fluids system for automating the sample handling process associated with analytical processes and especially bioanalytical processes such as introducing samples into LC systems, HPLC systems, etc., it will be herein described chiefly in this context. However, the principles of the invention in their broader aspects can be adapted to other types of systems.

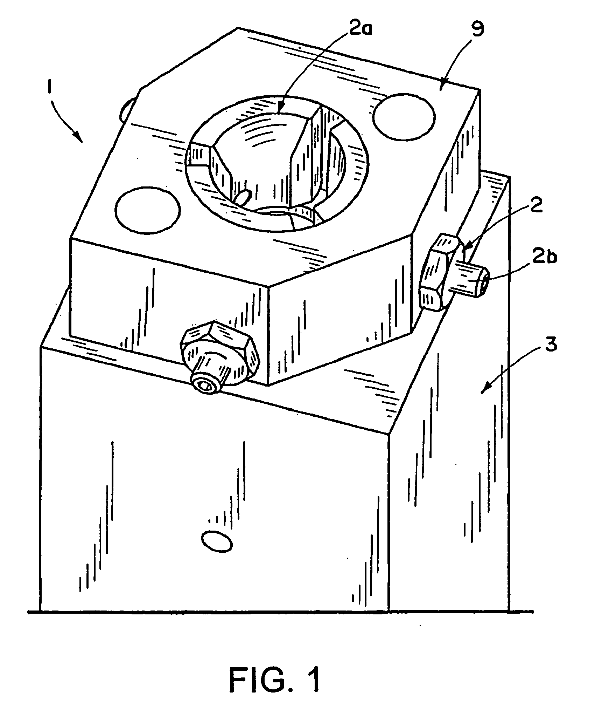

Referring now in detail to the drawings and initially to FIG. 1, an exemplary embodiment of a grid assembly according to one aspect of the invention, herein also referred to as a vertical grid, is designated generally by reference character 1. The assembly 1 generally comprises grid block (housing) 9 supporting a plurality of electrical contacts 2 (three in the illustrated example), and a mount 3, such as a bracket, for mounting the grid assembly in relation to other components of an overall sample handling system.

As seen in FIGS. 1-4, each electrical contact 2 has internal and external features. Internal contact portions 2a of the electrical contacts can interface with push pins 5 on an autonomous syringe 4 while external contact portions 2b of the electrical contacts can provide convenient connection to an on-board or remote power and communication electronics. The internal contact portions are disposed around an aperture 9a in the housing that receives the syringe 4. Possible power and communication devices for vertical grids are described in WO-A-2006/083695.

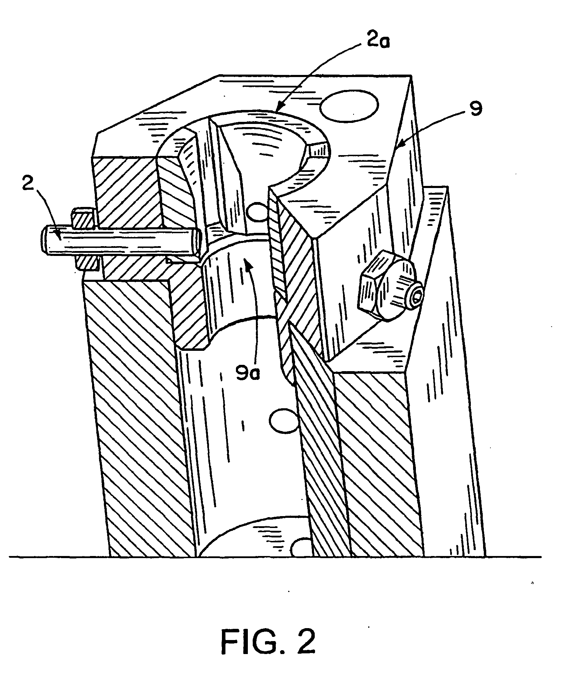

FIG. 2 is a cut away view of the vertical grid device shown in Fig 1. As shown, the internal contact portions of the contacts are circumferentially spaced apart and electrically isolated from one another, and each has a vertical (axial) extent that may be equal in length to the height of the grid block 9. Thus, the internal contact portions 2a of the electrical contacts 2 have a vertical, linear nature as compared to the horizontal, annular nature of the corresponding internal electrical contacts of the horizontal grid described in WO-A-2006/ 083695. Electrical continuity between the internal and external electrical contact portions can be effected by any suitable means such as by the illustrated unitary structure, or by conductive traces, conductor affixed to the inner and outer contact portions, etc.

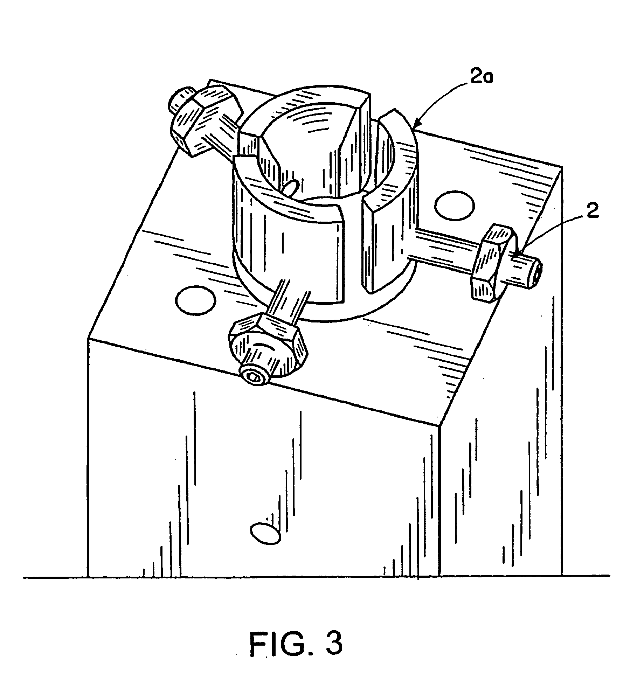

In FIG. 3 the grid block has been partly removed to show just the electrical contacts and their relation to the mounting bracket 3. FIG. 3 also shows how the internal electrical contact portion has a substantial vertical surface to provide considerable vertical freedom for placement of the syringe within the grid element while still maintaining electrical contact between them. The internal electrical contact shape (e.g. arcuate) also has a significant horizontal surface to allow reasonable rotational freedom of the syringe while maintaining reliable electrical contact. This provides a large amount of tolerance in assembling and aligning the grids with the syringe push pins 5.

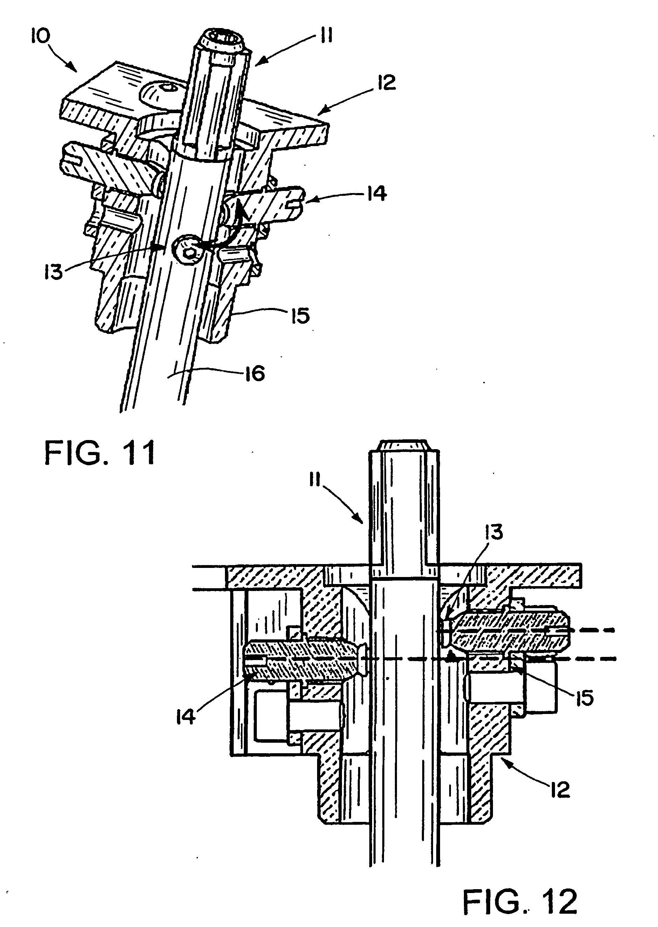

If desired, one or more of the contacts 2 could be radially compliant, i.e. radially movable and resiliently biased radially inwardly. This could be done, for example, by interposing a spring (not shown) between the grid block and the illustrated nut or other abutment on the radially extending stem of the contact, as well as by other suitable means. Another grid design with compliant contacts is shown in FIGS. 11-15 and described below.

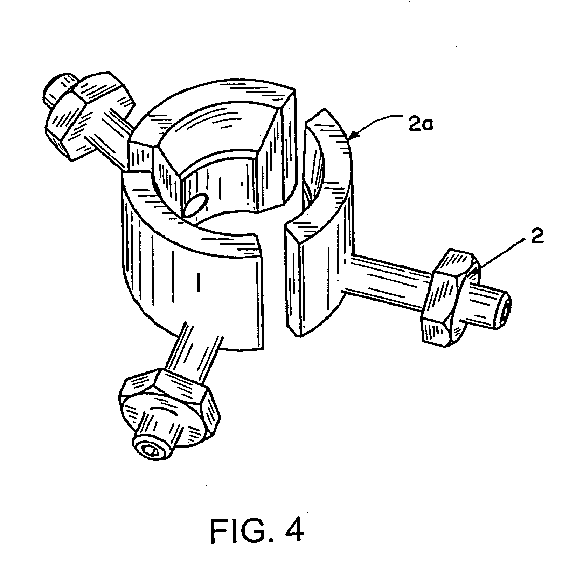

FIG. 4 shows the vertical grid electrical contacts 2 by themselves.

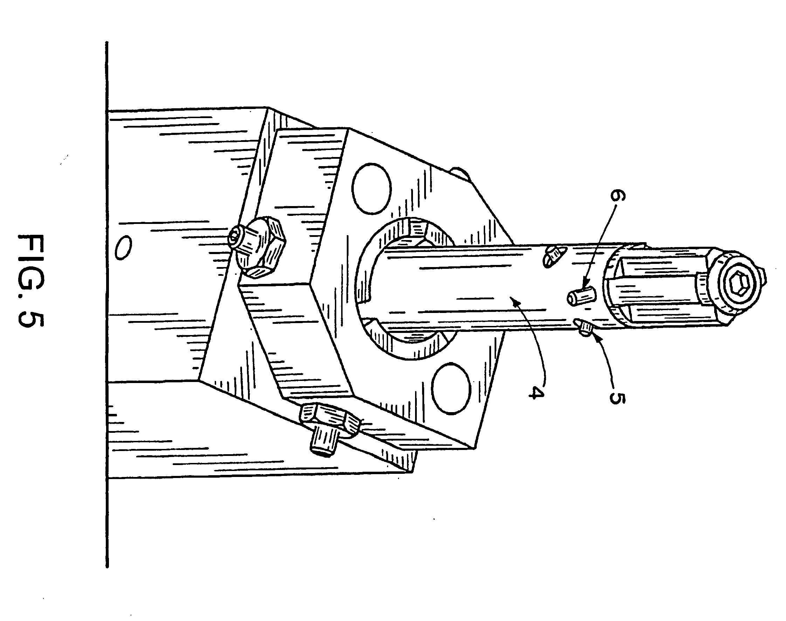

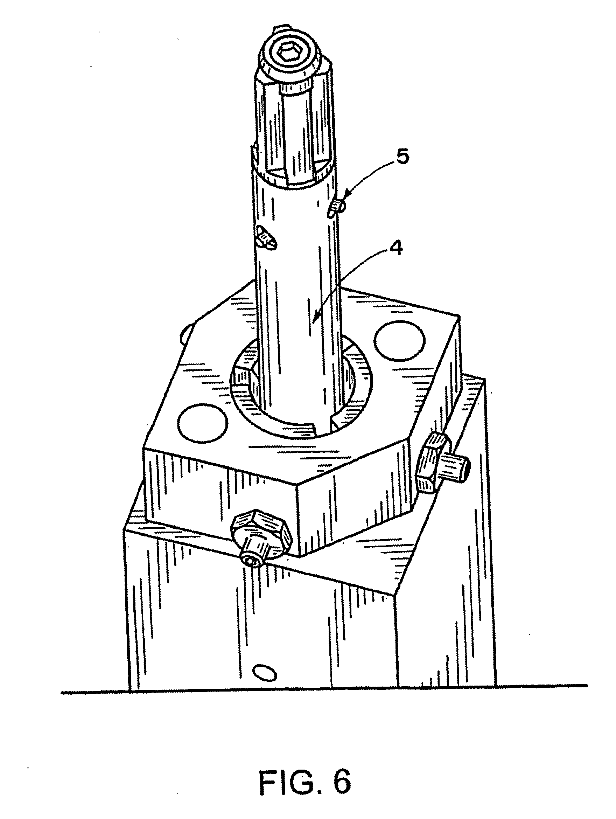

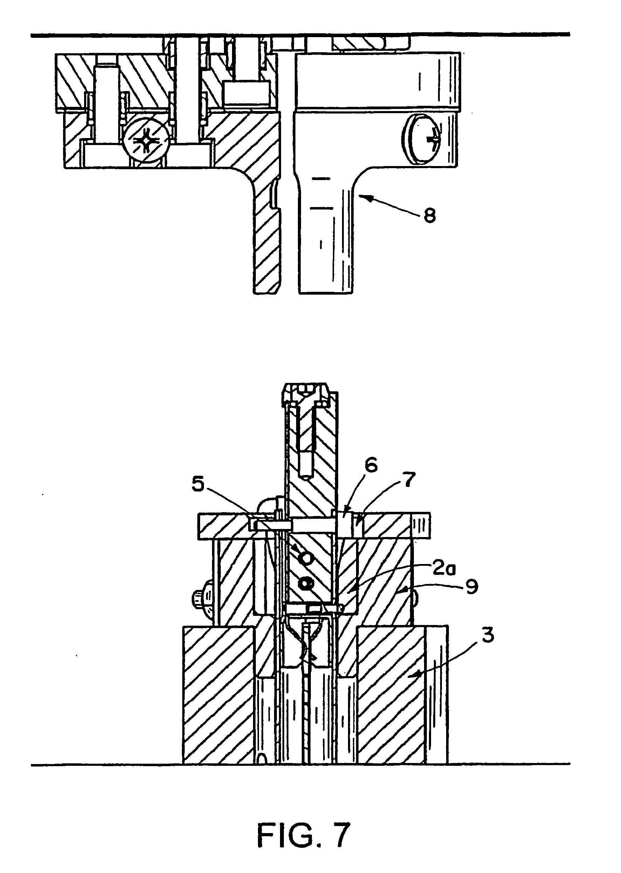

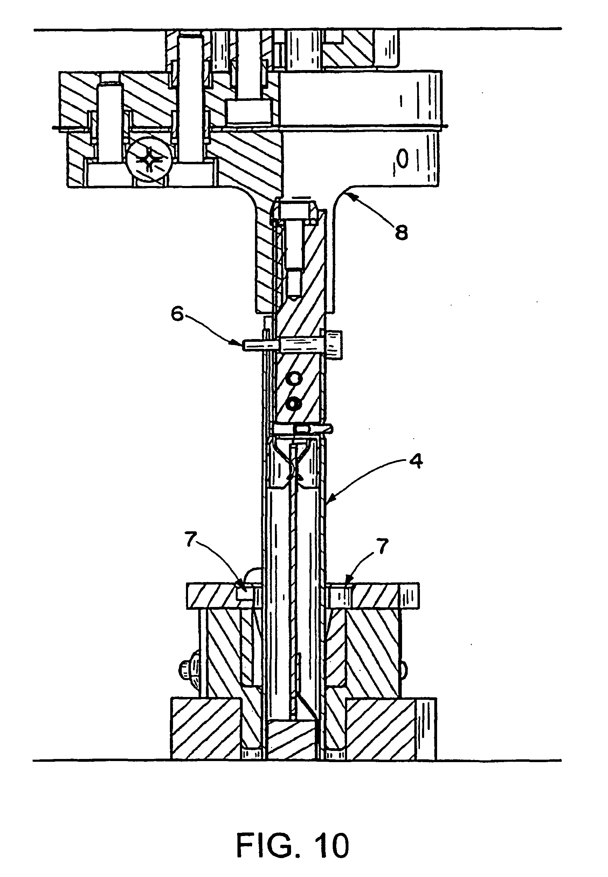

FIGS. 5 and 6 illustrate how the grid device articulates with an autonomous syringe such as the syringe disclosed in WO-A-2006/083695. FIG. 5 shows the syringe capable of either rotationally anisotropic or isotropic application. This style of syringe contains an asymmetric clocking screw passing through its diameter which can be used to nestle into a corresponding notch on the grid top plate (not shown in this figure) to enforce rotational compliance to a predefined orientation. FIGS. 7 and 10 show a grid top plate containing a clocking notch. In situations where total rotational freedom is allowed or desirable, the grid top plate can be made flat (with no clocking notch) allowing the syringe to be freely rotated about its long axis despite possessing an asymmetric clocking screw. Another possibility for conferring full rotational freedom is to utilize a syringe without a clocking screw as shown in FIG. 6. This syringe style maintains total rotational freedom with either a flat or notched grid top plate. To allow full rotational freedom electrically in cases where it is allowed mechanically, the grid can be configured with auto-sensing circuitry to determine which internal electrical contact is mated with which syringe push pin. This is a similar mechanism to that described for the gripper assembly in WO-A-2006/ 083695.

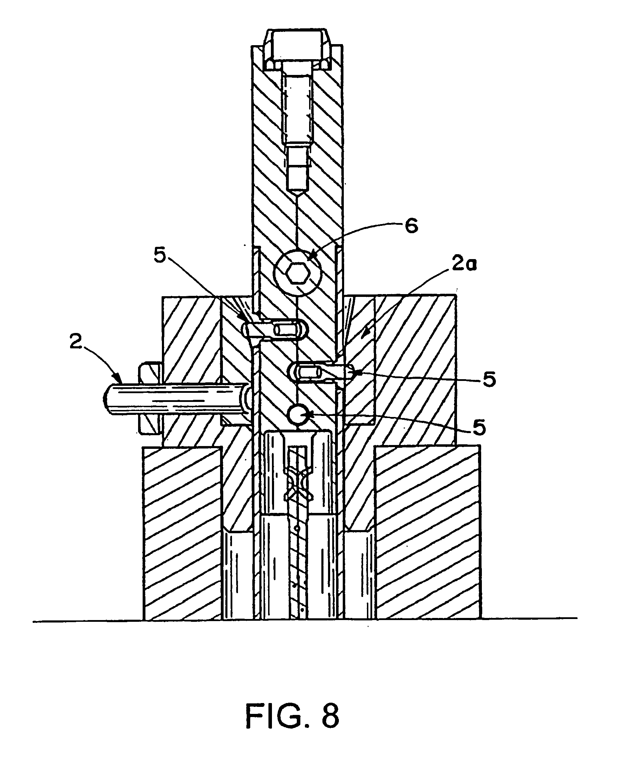

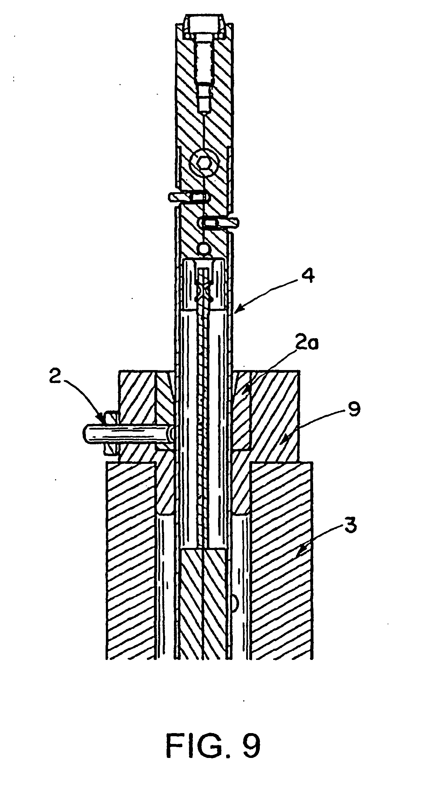

FIGS. 7 through 10 are cross-sectional views further illustrating various aspects and features already mentioned regarding the vertical grid assembly. FIGS. 7 and 8 depict how fully seated syringes and their electrical push pins can engage with the grid inner vertical contacts. They also show the grid assembly and syringe in relation to a gripper assembly 8. FIGS. 9 and 10 provide cross-sectional views showing relations among the grid assembly, a partially inserted or retracted syringe, and the gripper assembly 8.

As will be appreciated, the vertical grid assembly enables one or more of the following characteristics:
1) does not require "shutting down" a syringe before inserting it into or removing it form the grid to prevent data corruption - leading to faster overall transport and drop-off times for automated systems.
2) allows autonomous syringes to be placed at any desired vertical location within hardware limitations.
3) can be single entities or be made to form arrays of multiple grid elements with spacing as close as 9 mm between nearest neighbors.

Turning now to FIGS. 11 and 12, an exemplary syringe and grid system according to another aspect of the invention is shown at 10. The system 10 includes a grid 12 including at least one annulus 15, an at least one compliant, electrical contact 14 located at an inner diameter surface of the annulus. A syringe 11 is shown insertable into and removable from the annulus of the grid body 15, the syringe 11 having at least one fixed electrical contact 13 on the periphery of the syringe body 16. The contact 14 on the inner diameter surface of the annulus 15 engages the contact 13 on the periphery of the syringe body 16 when the syringe 11 is inserted into the annulus of the grid 12. As shown, the grid 12 contains compliant, conductive push pins 14 while the syringe 11 contains fixed contacts 13. The use of compliant, electrical contacts 14 in the grid 12 allows much larger, more robust components/contacts than can be fitted to the syringe body 16 providing better reliability, lifetime, and a larger electrical contact surface area. The compliant contacts 14 (push pins in this example) are spatially separated axially and azimuthally (circumferentially) on the inner surface of the annulus 15 with each contact having a bullet shaped electrical contact surface at its nose end. Conversely, the fixed contacts 13 on the syringe 1 are correspondingly spatially arranged to mate with the contacts 14 of the grid 12. Although not shown, alternative arrangements include compliant electrical contacts 14 on both the syringe 11 and grid 12.

The electrical contacts can provide convenient connection to an on-board or remote power and communication electronics. Possible power and communication devices for vertical grids are described in WO-A-2006/083695.

In another embodiment, the contacts may have axially and/or radially elongated contact surfaces as described above in connection with the embodiment shown in FIGS. 1-10.

To further enhance the electrical make and break lifetime and reliability, complimentary shapes for the corresponding syringe and grid contacts 13 and 14 may be used. An example is shown in FIGS. 3 and 4 where the grid 12 contains compliant probes 14 having a bullet shaped electrical contact surface 20. The syringe 11, on the other hand, contains fixed contacts 13 with a dimple or other recess 21 on its mating surface similar in form, but complimentary (i.e. loosely in relief), to the grid contact's bullet shape contact surface thus enhancing the contact area. FIG. 3 highlights the dimpled nature of the syringe's electrical contact 13 as well as the bullet shaped, compliant electrical contact 14 (probe) used in the grid 12. The grid contact 14 is shown slightly displaced away from the syringe contact 13 to illustrate its full surface shape. FIG. 4 shows the grid contact 14 fully seated in the recess of the syringe contact. The nose 20 of the grid contact 14 recesses into the dimple 21 of the syringe's contact member 12, to provide enhanced electrical contact 14 as well as holding force for the syringe 11 while it is placed in the grid 12. Improvements in both lifetime and insertion force are obtained when the surfaces on both the grid and syringe contacts 13, 14 are smooth and have no sharp breaks or ridges. As will be appreciated, the grid contact could instead have the dimple and the syringe contact could have a bullet-shape contact surface, if desired.

Although only one annulus of the grid and one syringe is shown, the syringe and grid system may have multiple annuluses and syringes. The multiple annuluses may be discrete or formed by a common body. For example, a grid block may contain a unitary arrangement of annuluses, the annuluses being the portions of the grid block that respectively form an array of apertures for receiving respective syringes.

Preferably, the optimum electrical contact placement for passive syringe/grid systems which use the above-described electrical contact mechanism to prevent the syringe from being displaced from the grid during operation is to place each contact pair such that the holding force for it is 1/n the total desired holding force needed to prevent the syringe from dislodging from the grid during its operation. Here n is the total number of grid probes 14 contacting syringe contacts 13 for each grid. For passive syringe/grid systems employing a means other than the electrical contact mechanism (including no means at all) to prevent the syringe from dislodging from the grid during operation, each contact pair is positioned such that the contact force is 1/n the gravitational force of the syringe. Again, n is the total number of grid probes contacting syringe contacts for each grid. More generally, the holding force effected between the mating contacts can be used to hold the syringes in the grid against any forces that otherwise would tend to unseat the syringes from the grid and/or move the contacts out of registry with one another.

To assist with achieving the optimal tension and alignment between the compliant probe 14 and its corresponding syringe contact 13, probe adjustment capabilities can be designed into the grid housing such that the probe's position can be modified in all spatial dimensions including toward and away from the syringe on the grid's inner diameter aspect. Alternatively or in addition, syringe contact adjustment capabilities can be designed into the syringe housing such that the contact's position can be modified in all spatial dimensions including toward and away from the probe on the grid's inner diameter aspect. Once the grid's probes' optimal position relative to the syringe's contacts has been established, hard features can be designed into the grid itself and/or syringe to ensure proper probe and contact positioning from grid to grid and syringe to syringe as shown in FIGS. 11-14.

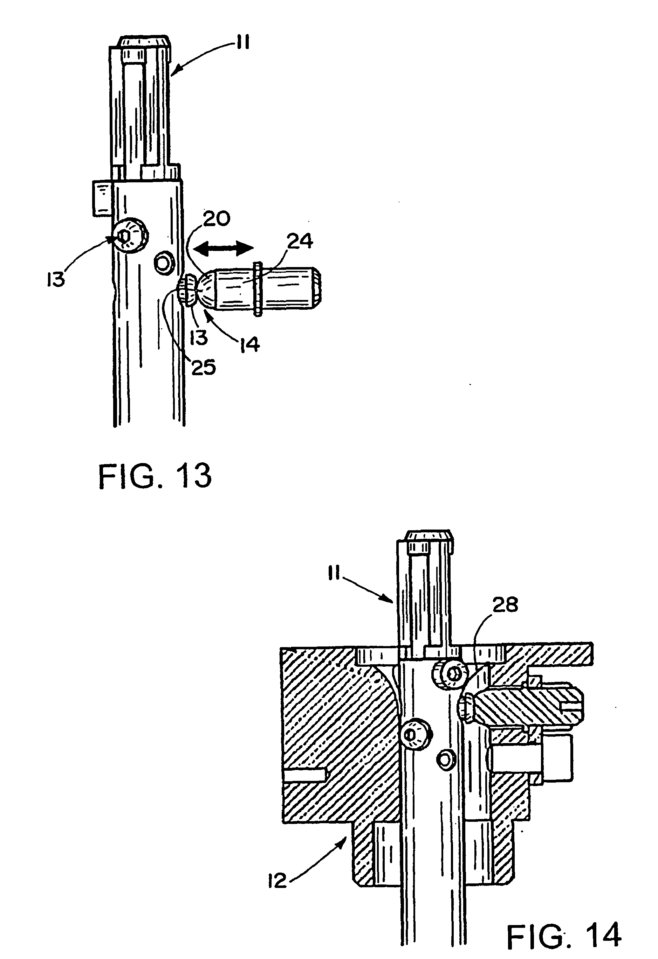

Alternatively or in addition, the biasing force of the compliant contacts 14 can be selected to provide the desired contact force and/or holding force against axial movement of the syringe relative to the grid. The compliant contact may be, for example, a resiliently biased plunger contact member (pogo pin) that extend through and protrude from the interior side wall of the annulus. The pogo pins may be threaded into or otherwise secured to the annulus, and position adjustment may be provided as desired. Also, pogo pins with the desired spring force and plunger stroke may be selected. As seen in FIG. 13, the compliant grid contact 14 may have a tubular housing 24 and a telescoping plunger 25.

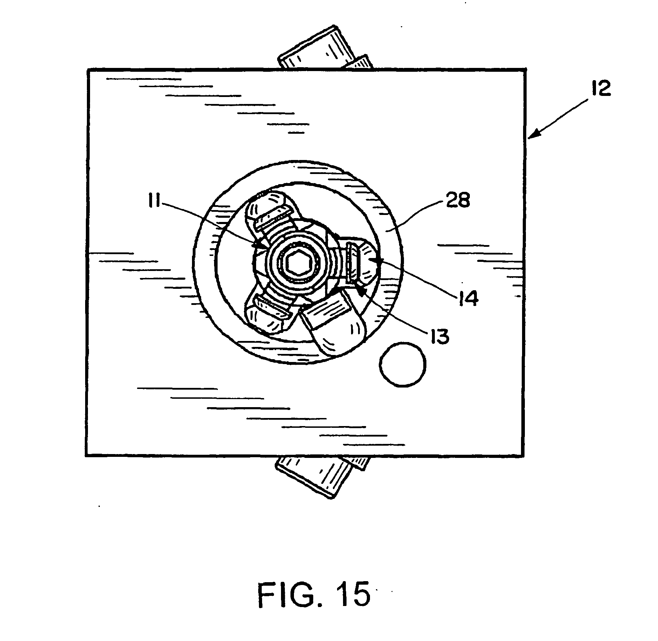

As shown in FIG. 15, there is no material of any kind between the grid's electrical contacts 14 and the top of the grid 12. This configuration prevents skiving between the syringe 11 and the grid 12 in the regions above the grid's electrical contacts 14, which greatly reduces or completely eliminates non-conductive material from falling or being dragged between the respective electrical connections 13 and 14. On the other hand, the interstitial zones (i.e. the azimuthal sectors between a grid's electrical contacts 14) are designed to contact the syringe 11, guide it vertically into the station, and provide lateral support to the syringe 11 once inserted.

The top aspect of the grid 12 may contain a smoothed lead-in shape forming a tapered mouth 28 to accommodate proper syringe insertion despite possible slight to moderate misalignment of the x, y, z gantry or human placement relative to the grid's centerline. The bottom aspect of the grid 12 may also have a rounded profile to handle any non-smooth surfaces along the syringe's length as the syringe 11 is retracted from the grid 12 during normal operation. Finally, to assist with smooth insertion and retraction as well as minimize any material shedding or skiving, the grid material may be chosen to possess the following properties: 1) high lubricity, 2) non-shedding, 3) high chemical inertness to common solvents used in the application, and/or 4) easily machined. While any suitable material having these qualities would be particularly acceptable, Delrin^{®} AF100 (E. I. du Pont de Nemours and Company) has performed acceptably in terms of specific wear rate and dynamic coefficient of friction against steel (the external housing of the syringes may be made of steel).

As illustrated in FIGS. 11-14, the contacts 14 on the grid side, whether compliant or fixed, are oriented either horizontally or slightly downward in order to prevent the restorative forces of the grid's contact from pushing the syringe upward and releasing the contact needed for reliable electrical connections. Conversely, also shown on FIGS. 11-14, the contacts 13 on the syringe side, whether compliant or fixed, may be oriented either horizontally or slightly upward in order to prevent the restorative forces of the syringe's contact from pushing the syringe upward and releasing the contact needed for reliable electrical connections.

The grid 12 may also be an active grid configuration whereby the electrical probes 14 are actively retracted into the grid body 12 during the syringe's insertion or removal and are actively extended into the grid's annulus when the syringe 11 is in place to make contact with its counterpart on the syringe 11. The active grid itself might or might not contain the lead-in features described in the above passive grid description. Whether the lead-in is needed or not mostly depends on the accuracy and reliability of the gantry motion mechanism on the system. Like with the passive grid, both the syringe and grid can contain fixed or compliant electrical contacts in any combination. Much better performance is achieved when at least one of the elements contains compliant contacts, however.

For instance, the grid contacts (or additionally or alternatively the syringe contacts) may be actively moved radially inwardly and/or outwardly other than by engagement with the mating contact. For instance, the contacts may be moved by a motive device controlled by grid electronics and/or syringe electronics. For instance, the contact plungers could be threaded into the grid body and rotatably driven by a drive mechanism (such as an electric motor and associated gearing) to move the contact plunger radially inwardly and outwardly. During syringe insertion, the grid and/or syringe contacts are retracted until the contacts on the grid and syringe are brought into axial registry, after which the grid and/or syringe contacts can be moved radially into engagement with one another.

## Claims

1. A grid for a laboratory sample management system comprising an annulus (15) into which a syringe (11) can be axially inserted; and a plurality of compliant, electrical grid contacts (14) at the interior surface of the annulus for effecting electrical contact with a fixed or compliant syringe contact (13) on the syringe whereby electrical contact between the syringe and the grid can be established, wherein the plurality of compliant, electrical grid contacts are circumferentially spaced apart around the interior surface of the annulus for establishing electrical contact with correspondingly arranged electrical syringe contacts on the syringe.

2. The grid of claim 1, wherein a plurality of compliant, electrical grid contacts are axially staggered along the annulus.

3. The grid of any preceding claim, wherein the grid contact includes a plunger contact (25) that is resiliently inwardly biassed to an extended position protruding into the interior of the annulus.

4. The grid of any preceding claim, wherein the grid body has a tapered entry (28) for guiding the syringe into the annulus during insertion of the syringe into the grid.

5. The grid of claim 4, wherein the grid contact has a bullet-shaped nose (20), and wherein the nose of the grid contact preferably has a recess formed in the end thereof for mating receipt of a nose end of a syringe contact.

6. A syringe and grid system comprising the grid of any preceding claim, and a syringe insertable into and removable from the annulus of the grid, the syringe having at least one fixed or compliant electrical syringe contact (13) on the periphery of the syringe which is engaged by the grid contact (14) on the inner diameter surface of the annulus when the syringe is inserted into the annulus of the grid.

7. The syringe and grid system of claim 6, wherein the grid contact is actively retracted into the grid body during insertion of the syringe into the annulus of the grid or removal of the syringe from the annulus of the grid: and the grid contact on the inner diameter surface of the annulus is actively extended into the annulus of the grid when the syringe is at a predetermined position within the annulus and the grid contact registers against the syringe contact.

8. An interface device (1) for a sampling probe (4) that includes electrical circuitry and a connector assembly for connecting the electrical circuitry to an external device, the connector assembly including a plurality of contact members (5) located at a side wall of the housing, said interface device (1) including an aperture (9a) for receiving the sampling probe, and a plurality of vertically elongated mating contact members (2a) for interfacing with the contact members of the connector assembly, wherein the plurality of vertically elongated mating contact members are circumferentially arranged around the aperture for effecting contact with respective contact members of the connector assembly.

9. An interface device according to claim 8, wherein the contact or contacts are carried in a housing.

10. An interface device according to claim 8 or claim 9, wherein each contact has an outer portion for connecting to another electrical component.

11. An interface device according to any one of claims 8 to 10, wherein a plurality of apertures are provided with respective contacts for receiving and interfacing with a plurality of sampling probes.

12. An interface device according to claim 11, wherein the apertures are arranged in an array with the apertures at a uniform centre-to-centre spacing in each row thereof.

13. A syringe and grid system comprising a grid (12) having at least one annulus (15), the annulus having at least one electrical grid contact (14) on an inner diameter surface of the annulus; and a syringe (11) insertable into and removable from the annulus of the grid, the syringe having at least one electrical syringe contact (13) on the periphery of the syringe for mating with the grid contact; and wherein at least one of the mating contacts is actively retracted for insertion of the syringe into the annulus of the grid or removal of the syringe from the annulus of the grid and actively extended to engage the other contact once the mating contacts have been brought into registry with respect to one another.

14. The system of claim 13, wherein the contact on the inner diameter surface of the annulus is actively retracted into the grid during insertion of the syringe into the annulus of the grid or removal of the syringe from the annulus of the grid; and wherein the contact on the inner diameter surface of the annulus is actively extended into the annulus of the grid when the syringe is at a predetermined position within the annulus and the contact of the annulus registers against the contact on the syringe.

15. A method of effecting electrical communication between a syringe (11) and a grid (12) in a laboratory sample management system, comprising actively retracting at least one of the mating contacts (13, 14) for insertion of the syringe into the grid and/or removal of the syringe from the grid, and actively extending the at least one of the mating contacts to engage the mating contact once the mating contacts have been brought into registry with respect to one another.

## Patentansprüche

1. Grid für ein Laborprobenverwaltungssystem mit einem Ring (15), in den eine Spritze (11) axial eingebracht werden kann, und einer Mehrzahl nachgiebiger elektrischer Gridkontakte (14) an der Innenfläche des Rings zum Herstellen eines elektrischen Kontakts mit einem ortsfesten oder nachgiebigen Spritzenkontakt (13) an der Spritze, wodurch ein elektrischer Kontakt zwischen der Spritze und dem Grid hergestellt werden kann, wobei die Mehrzahl nachgiebiger elektrischer Gridkontakte in Umfangsrichtung entlang der Innenfläche des Rings voneinander beabstandet sind, um einen elektrischen Kontakt mit entsprechend angeordneten elektrischen Spritzenkontakten an der Spritze herzustellen.

2. Grid nach Anspruch 1, wobei eine Mehrzahl nachgiebiger elektrischer Gridkontakte entlang des Rings axial gestaffelt sind.

3. Grid nach einem vorherigen Anspruch, wobei der Gridkontakt einen Stößelkontakt (25) aufweist, der in Richtung nach innen in eine in das Innere des Rings vorstehende, ausgefahrene Position elastisch vorgespannt ist.

4. Grid nach einem vorherigen Anspruch, wobei der Gridkörper einen verjüngten Einlass (28) aufweist, um die Spritze beim Einbringen der Spritze in das Grid in den Ring hineinzuführen.

5. Grid nach Anspruch 4, wobei der Gridkontakt eine kugelförmige Nase (20) aufweist, und wobei die Nase des Gridkontakts vorzugsweise eine in deren Ende ausgebildete Aufnahme aufweist, um das Ende einer Nase eines Spritzenkontakts passend aufzunehmen.

6. Spritzen- und Gridsystem mit dem Grid nach einem vorherigen Anspruch und einer in den Ring des Grids einsetzbaren und aus diesem entfernbaren Spritze, wobei die Spritze wenigstens einen ortsfesten oder nachgiebigen elektrischen Spritzenkontakt (13) am Außenumfang der Spritze aufweist, an den der Gridkontakt (14) an der Innendurchmesserfläche des Rings angreift, wenn die Spritze in den Ring des Grids eingesetzt ist.

7. Spritzen- und Gridsystem nach Anspruch 6, wobei der Gridkontakt beim Einbringen der Spritze in den Ring des Grids oder beim Entfernen der Spritze aus dem Ring des Gitters aktiv in den Gridkörper zurückbewegt wird; und der Gridkontakt an der Innendurchmesserfläche des Rings aktiv in den Ring des Grids hinausbewegt wird, wenn sich die Spritze an einer vorbestimmten Position in dem Ring befindet und der Gridkontakt gegen den Spritzenkontakt ausgerichtet ist.

8. Schnittstellenvorrichtung (1) für eine Probensonde (4), die eine elektrische Schaltkreisanordnung und eine Verbindungsanordnung zum Verbinden der elektrischen Schaltkreisanordnung mit einer externen Vorrichtung aufweist, wobei die Anschlussanordnung eine Mehrzahl von Kontaktbauteilen (5), die an einer Seitenwand des Gehäuses angeordnet sind, aufweist, wobei die Schnittstellenvorrichtung (1) eine Apertur (9a) zur Aufnahme der Probensonde und eine Mehrzahl vertikal länglicher passender Kontaktbauteile (2a) zur Verbindung mit den Kontaktbauteilen der Verbindungsanordnung aufweist, wobei die Mehrzahl vertikal länglicher passender Kontaktbauteile entlang der Apertur in Umfangsrichtung angeordnet sind, um einen Kontakt mit entsprechenden Kontaktbauteilen der Verbindungsanordnung zu bewirken.

9. Schnittstellenvorrichtung nach Anspruch 8, wobei der Kontakt oder die Kontakte in einem Gehäuse getragen sind.

10. Schnittstellenvorrichtung nach einem der Ansprüche 8 oder 9, wobei jeder Kontakt einen äußeren Teil zum Verbinden mit einer anderen elektrischen Komponente aufweist.

11. Schnittstellenvorrichtung nach einem der Ansprüche 7 bis 10, wobei eine Mehrzahl von Aperturen mit entsprechenden Kontakten vorgesehen sind, um eine Mehrzahl von Probensonden aufzunehmen und Verbindungen mit diesen herzustellen.

12. Schnittstellenvorrichtung nach Anspruch 11, wobei die Aperturen in einer Anordnung angeordnet sind, wobei in jeder Reihe derselben die Aperturen mit gleichmäßigem Mitte-zu-Mitte-Abstand beabstandet sind.

13. Spritzen- und Gridsystem umfassend ein Grid (12) mit wenigstens einem Ring (15), wobei der Ring wenigstens einen elektrischen Gridkontakt (14) an einer Innendurchmesserfläche des Rings aufweist, und eine Spritze (11), die in den Ring des Grids einsetzbar und aus diesem entfernbar ist, wobei die Spritze wenigstens einen elektrischen Spritzenkontakt (13) am Außenumfang der Spitze zur Verbindung mit dem Gridkontakt aufweist; und wobei wenigstens einer der Gegenkontakte zum Einsetzen der Spritze in den Ring des Grids oder Entfernen der Spritze aus dem Ring des Grids aktiv zurückbewegt wird und aktiv vorbewegt wird, um an dem anderen Kontakt anzugreifen, sobald die Gegenkontakte relativ zueinander in Übereinstimmung gebracht worden sind.

14. System nach Anspruch 13, wobei der Kontakt an der Innendurchmesserfläche des Rings beim Einbringen der Spritze in den Ring des Grids oder beim Entfernen der Spritze aus dem Ring des Grids aktiv in das Grid zurückbewegt wird, und wobei der Kontakt an der Innendurchmesserfläche des Rings aktiv in den Ring des Gitters hineinbewegt wird, wenn sich die Spritze in einer vorbestimmten Position in dem Ring befindet und der Kontakt des Rings gegen den Kontakt der Spritze ausgerichtet ist.

15. Verfahren zum Herstellen elektrischer Kommunikation zwischen einer Spritze (11) und einem Grid (12) in einem Laborprobenverwaltungssystem, umfassend zum Einbringen der Spritze in das Grid und/oder zum Entfernen der Spritze aus dem Grid wenigstens einen der Gegenkontakte (13, 14) aktiv zurückzubewegen, und den wenigstens einen der Gegenkontakte aktiv vorzubewegen, um am Gegenkontakt anzugreifen, wenn die Gegenkontakt relativ zueinander in Übereinstimmung gebracht worden sind.

## Revendications

1. Grille pour un système de gestion d'échantillon de laboratoire comprenant un espace annulaire (15) dans lequel une seringue (11) peut être insérée de manière axiale ; et une pluralité de contacts de grille électriques souples (14) au niveau de la surface intérieure de l'espace annulaire pour effectuer le contact électrique avec un contact de seringue fixe ou souple (13) sur la seringue moyennant quoi le contact électrique entre la seringue et la grille peut être établi, dans laquelle la pluralité de contacts de grille électriques souples sont espacés de manière circonférentielle autour de la surface intérieure de l'espace annulaire pour établir le contact électrique avec des contacts de seringue électriques agencés de manière correspondante sur la seringue.

2. Grille selon la revendication 1, dans laquelle une pluralité de contacts de grille électriques souples sont décalés de manière axiale le long de l'espace annulaire.

3. Grille selon l'une quelconque des revendications précédentes, dans laquelle le contact de grille comprend un contact de piston plongeur (25) qui est sollicité de manière élastique vers l'intérieur jusqu'à une position étendue faisant saillie dans l'intérieur de l'espace annulaire.

4. Grille selon l'une quelconque des revendications précédentes, dans lequel le corps de grille a une entrée progressivement rétrécie (28) pour guider la seringue dans l'espace annulaire pendant l'insertion de la seringue dans la grille.

5. Grille selon la revendication 4, dans laquelle le contact de grille a un nez en forme de balle (20), et dans laquelle le nez du contact de grille a de préférence un évidement formé dans son extrémité pour la réception de couplage d'une extrémité de nez d'un contact de seringue.

6. Seringue et système de grille comprenant la grille selon l'une quelconque des revendications précédentes et une seringue pouvant être insérée dans et retirée de l'espace annulaire de la grille, la seringue ayant au moins un contact de seringue électrique souple ou fixe (13) sur la périphérie de la seringue qui est mis en prise par le contact de grille (14) sur la surface de diamètre interne de l'espace annulaire lorsque la seringue est insérée dans l'espace annulaire de la grille.

7. Seringue et système de grille selon la revendication 6, dans lesquels le contact de grille est activement rétracté dans le corps de grille pendant l'insertion de la seringue dans l'espace annulaire de la grille ou le retrait de la seringue de l'espace annulaire de la grille : et le contact de grille sur la surface de diamètre interne de l'espace annulaire est étendu activement dans l'espace annulaire de la grille lorsque la seringue est dans une position prédéterminée à l'intérieur de l'espace annulaire et le contact de grille s'aligne contre le contact de seringue.

8. Dispositif d'interface (1) pour une sonde d'échantillonnage (4) qui comprend des circuits électriques et un ensemble de connecteur pour raccorder les circuits électriques à un dispositif externe, l'ensemble de connecteur comprenant une pluralité d'éléments de contact (5) positionnés au niveau d'une paroi latérale du boîtier, ledit dispositif d'interface (1) comprenant une ouverture (9a) pour recevoir la sonde d'échantillonnage, et une pluralité d'éléments de contact de couplage verticalement allongés (2a) pour s'interfacer avec des éléments de contact de l'ensemble de connecteur, dans lequel la pluralité d'éléments de contact de couplage verticalement allongés sont agencés de manière circonférentielle autour de l'ouverture pour effectuer le contact avec les éléments de contact respectifs de l'ensemble de connecteur.

9. Dispositif d'interface selon la revendication 8, dans lequel le contact ou les contacts est (sont) supporté(s) dans un boîtier.

10. Dispositif d'interface selon l'une quelconque des revendications 8 à 9, dans lequel chaque contact a une partie externe pour se raccorder à un autre composant électrique.

11. Dispositif d'interface selon l'une quelconque des revendications 8 à 10, dans lequel une pluralité d'ouvertures sont prévues avec des contacts respectifs pour recevoir et s'interfacer avec une pluralité de sondes d'échantillonnage.

12. Dispositif d'interface selon la revendication 11, dans lequel les ouvertures sont agencées sur une rangée avec les ouvertures au niveau d'un espacement uniforme centre à centre dans chacune de ses rangées.

13. Seringue et système de grille comprenant une grille (12) ayant au moins un espace annulaire (15), l'espace annulaire ayant au moins un contact de grille électrique (14) sur une surface de diamètre interne de l'espace annulaire ; et une seringue (11) pouvant être insérée dans et retirée de l'espace annulaire de la grille, la seringue ayant au moins un contact de seringue électrique (13) sur la périphérie de la seringue pour se coupler avec le contact de grille ; et dans lesquels au moins l'un des contacts de couplage est activement rétracté pour l'insertion de la seringue dans l'espace annulaire de la grille ou le retrait de la seringue de l'espace annulaire de la grille est activement étendu pour mettre en prise l'autre contact une fois que les contacts de couplage ont été amenés en alignement les uns par rapport aux autres.

14. Système selon la revendication 13, dans lequel le contact sur la surface de diamètre interne de l'espace annulaire est activement rétracté dans la grille pendant l'insertion de la seringue dans l'espace annulaire de la grille ou le retrait de la seringue de l'espace annulaire de la grille ; et dans lequel le contact sur la surface de diamètre interne de l'espace annulaire est activement étendu dans l'espace annulaire de la grille lorsque la seringue est dans une position prédéterminée à l'intérieur de l'espace annulaire et le contact de l'espace annulaire s'aligne contre le contact sur la seringue.

15. Procédé pour effectuer une communication électrique entre une seringue (11) et une grille (12) dans un système de gestion d'échantillon de laboratoire, comprenant les étapes consistant à rétracter activement au moins l'un des contacts de couplage (13, 14) pour l'insertion de la seringue dans la grille et/ou le retrait de la seringue de la grille, et étendre activement le au moins un des contacts de couplage pour mettre en prise le contact de couplage une fois que les contacts de couplage ont été amenés en alignement les uns par rapport aux autres.
